# EUROPEAN PATENT SPECIFICATION

(11) **EP 3 416 305 B1**
(45) Date of publication and mention of the grant of the patent: **26.02.2020**
(21) Application number: 17175972.3
(22) Date of filing: 14.06.2017
(51) Int. Cl.: H04B 10/112, H04B 10/116

(54) **COMMUNICATION SYSTEM**
KOMMUNIKATIONSSYSTEM
SYSTÈME DE COMMUNICATION

(43) Date of publication of application: 19.12.2018
(73) Proprietor: Vestel Elektronik Sanayi ve Ticaret A.S., 45030 Manisa (TR); Özyegin Üniversitesi, 34794 Çekmeköy/ Istanbul (TR)
(72) Inventor: GÜLBAHAR, Burhan, 34794 Çekmeköy/Istanbul (TR); SENCAN, Sezgin, 45030 Manisa (TR)
(74) Representative: Ascherl, Andreas

(56) References cited:
- WO-A1-2013/190410
- US-A1- 2011 044 218
- US-A1- 2011 063 510
- US-A1- 2013 183 042
- US-A1- 2014 029 952
- US-B1- 7 920 794
- LEITGEB E ET AL: "Combination of Free Space Optics (FSO) and RF for different wireless application scenarios", 2015 9TH EUROPEAN CONFERENCE ON ANTENNAS AND PROPAGATION (EUCAP), EURAAP, 13 April 2015 (2015-04-13), pages 1-4, XP033213178, [retrieved on 2015-08-27]
- MANDL P ET AL: "Hybrid systems using DVB-T, WLAN and FSO to connect peripheral regions with broadband Internet services", CAD SYSTEMS IN MICROELECTRONICS, 2009. CADSM 2009. 10TH INTERNATIONAL CONFERENCE - THE EXPERIENCE OF DESIGNING AND APPLICATION OF, IEEE, PISCATAWAY, NJ, USA, 8 June 2009 (2009-06-08), pages 67-71, XP031514087, ISBN: 978-953-184-130-6

## Description

### TECHNICAL FIELD

The invention relates to a communication system.

### BACKGROUND

Although applicable in any application that requires data communication services, the present invention will mainly be described in conjunction with domestic data services.

In modern society it is vital to provide data communication to as many people as possible. Usually data communication services are provided via RF based or cable based systems, like e.g. UMTS or LTE or cable internet.

However, in remote locations often there is neither a LTE base station in reach nor any cable based internet access available. To provide internet access to such remote locations data may e.g. be transmitted via satellite. However, satellite based communication suffers a huge latency and is affected by bad weather conditions.

In "Combination of Free Space Optics (FSO) and RF for different wireless application scenarios" by Leitgeb E. et al. a system for data communication via RF in the downlink and optical signals in the uplink is disclosed. In US 2011 / 044 218 A1 a multi-radio access technology is disclosed that allows using different RF technologies in downlink and uplink direction to match respective requirements. "Hybrid Systems using DVB-T, WLAN and FSO to connect peripheral regions with broadband Internet services" by Mandl P. et al. discloses a system using WLAN and FSO as data uplink channel and DVB-T as data downlink channel.

There is a need for an improved data communication system.

### SUMMARY OF THE INVENTION

The present invention provides a communication system with the features of claim 1.

The present invention is based on the finding that RF signals are already present in today's public data infrastructure, like e.g. in TV broadcast signals and cell phone broadcast signals. Further, the present invention is based on the finding that visible light data communication may be used to transmit data at very high data rates over large distances.

The present invention uses these findings and provides a hybrid data communication system that uses different physical channels for uplink and downlink data transmission.

On the downlink side RF signals are provided from the first RF downlink data interface from a central data center to the second RF downlink data interfaces in the remote data nodes.

In contrast to the RF based downlink, visible light data communication is used on the uplink channel, where the second visible-light based uplink data interfaces transmit data from the remote data nodes to the first visible-light based uplink interface in the central data center.

The central data center may e.g. be coupled to the internet or comprise dedicated data sources, like e.g. file servers or the like, that provide the data to be transmitted in the downlink.

The present invention therefore provides a wireless data service with a hybrid configuration, where the downlink channel does not share the same transmission medium with the uplink channel. Interference are reduced and sharing of bandwidth between the downlink and the uplink channel is therefore not necessary.

Therefore a high bandwidth data service may be provided to a plurality of remote data nodes at the same time from a single central data center.

Further embodiments of the present invention are subject of the further subclaims and of the following description, referring to the drawings.

In an embodiment, the central data center may comprise a TV broadcast station.

TV broadcast stations are usually positioned at exposed spots or locations to cover an area as large as possible with the RF signal that carries the TV program. Therefore, including the central data center with the TV broadcast station makes use of this exposed location to provide the data service to as many remote data nodes as possible with a single central data center.

In an embodiment, the first RF downlink data interface may comprise a TV signal RF data interface.

The present invention acknowledges that the RF signal emitted by the TV broadcast station is a RF signal that may be enhanced to carry an additional data stream that may carry a broadcast data stream or data that is requested by the remote data nodes via the uplink.

In an embodiment, the TV signal RF data interface may comprise an encoder configured to encode data to be transmitted in the downlink in a TV signal transmitted via the TV signal RF data interface.

The encoder may e.g. encode a data stream into the TV signal such that it may be decoded at the receiver side. Encoding means that the data may e.g. be added to the TV signals in the form of images. For example a single TV channel that is not used for image or video transmission may be used to transmit the signals via VLC (Visible Light Communication), or a dedicated section of a TV image may be used to encode and transmit the data via VLC e.g. by modulating the brightness of the image. Further, the TV image may be divided into different sections and e.g. the brightness of the single sections may be modulated, especially with such high frequencies that the modulation is not visible to the human eye to overlay the modulation over the TV channel contents.

As an alternative the encoder may encode the data in signals of different TV channels at the same time such that the images transmitted for the different TV channels are not visibly modified. The data may e.g. be added to non-visible sections of the signals of the TV channels or the data may be distributed over the whole TV signal bandwidth such that the influence in every single TV channel is minimal.

Furthermore, a specific multiuser broadcast encoding of multimedia pictures or videos can be realized at the TV broadcast station before sending the data to the users. In addition, specific data hiding or steganography methods can be utilized in a way not to spoil the TV broadcast multimedia content. If the whole image is utilized to broadcast downlink packets of the users without any data hiding, then the image is encoded to include all the data of multiple houses which can reach hundreds of numbers. For example, in the simplest case each pixel can include twenty four bits downlink data of a single house. In this manner, all the devices which can access the output image of TV a decoder can decode internet data, such as mobile phones with cameras capturing TV images even without any RF antenna. With such an approach, there is no need for an extra hardware or demodulator block for the downlink in comparison with hybrid structures utilizing TV RF white spaces in a cognitive manner. The TV decoder performs ordinarily by only generating output images without any intervention with the image data.

Further, any other encoding scheme may be used that allows transmitting data embedded in the TV station RF signal. The user devices may then e.g. comprise decoders to demodulate a VLC data signal.

In an embodiment, the second RF downlink data interface may comprise a decoder that is configured to decode the data embedded in the TV signal, and a visible light communication downlink interface configured to output the decoded data.

The decoder may perform the reverse operation compared to the operations that are performed by the encoder. That means the decoder extracts the data that is embedded by the encoder in the TV signal from the TV signal for further processing by other elements of the communication system.

The remote data nodes may e.g. be provided in or on buildings, like homes or industrial buildings. In such buildings usually some TV sets or TV screens will be present. Therefore, as an addition or as an alternative, the decoder and the visible light communication downlink interface may be arranged in a TV set that receives the TV signal and emits the data via the TV screen as visible light based communication signal. It is understood that in case that the data is encoded into the TV channel images as indicated above, the decoder is just the image decoder that is usually present in TV screens. No additional decoder is needed, since the data will be directly emitted by the TV screen when it shows the respective TV channel.

However, a separate decoder unit may be provided that is independent of a TV set and may e.g. be a computer or the like.

The visible light communication downlink interface may in one embodiment comprise a light source that is configured to emit the decoded data according to a predetermined visible light communication standard. The visible light communication downlink interface may e.g. induce the modulation signal into a light installation of a building, where all light sources then start emitting respective modulated light that carries the data.

The visible light communication signal emitted by the visible light communication downlink interface may then e.g. be received by any mobile or static device, like e.g. smartphones, Tablet-PCs, or computers.

In an embodiment, the second visible-light based uplink data interface may comprise an uplink data receiver configured to receive uplink data in the respective remote data node.

The second visible-light based uplink data interface may be a kind of relay that receives uplink data from the devices, like e.g. smartphones, Tablet-PCs or computers, and transmits the data to the central data center. The uplink data receiver for receiving the uplink data may e.g. be a WIFI based data receiver or a visible light data receiver. It is understood, that in case that the uplink data receiver is a visible light data receiver, the uplink data receiver may use other frequencies than the visible light communication downlink interface.

In an embodiment, the second visible-light based uplink data interface may comprise a visible light data communication source for modulating the uplink data and emitting a respective visible light signal including the modulated uplink data.

The visible light data communication source may be any type of data source that is capable of directing modulated visible light to the first visible-light based uplink data interface. Such visible light data communication sources may e.g. be laser based light sources or LED based light sources.

In an embodiment the visible light data communication source may e.g. comprise a LED panel of a predefined size, e.g. 1 m * 1 m or the like. Such a LED panel may e.g. be installed on the rooftop of a building or inside the building behind a window.

Such LED or laser based visible light data communication sources may comprise a data encoder that modulates the light of the LEDs or laser according to the data received via the uplink data receiver.

In an embodiment, the first visible-light based uplink data interface may comprise at least one camera sensor to receive the visible light emitted by the second visible-light based uplink data interfaces.

Camera sensors, like e.g. CCD sensors are cheap and readily available electronic devices that can easily be integrated into the first visible-light based uplink data interface.

In an embodiment, the first visible-light based uplink data interface may comprise at least one optical arrangement to focus the visible light emitted by the second visible-light based uplink data interfaces onto the camera sensor.

The optical arrangement may comprise any type or combination of lenses, filters and other optical elements. The optical arrangement may be used to aim at the remote data nodes with the first visible-light based uplink data interface and therefore improve the reception of the visible light emitted by the second visible-light based uplink data interfaces.

In an embodiment, the at least one optical arrangement may comprise at least one telescope, like e.g. a high focal length telescope.

It is understood that the focal length of the telescope may be adapted to the distance between the central data center and the respective remote data nodes. With high focal length telescopes data may be transmitted over ranges of up to 50 km or more.

The focal length may especially be arranged such that more than one remote data node, i.e. the light emitted by more than one remote data node, may be received with one telescope and camera sensor pair. This allows evaluating or receiving the data provided by a plurality of remote data nodes at the same time with a single camera sensor.

In an embodiment, the central data center may comprise a data synchronization unit configured to synchronize the data received via the first visible-light based uplink data interface with the data transmitted via the first RF downlink data interface.

Data may be provided to the remote data nodes in the form of a predefined data stream. For example weather data, news or the like may be provided by the central data center to all remote data nodes.

However, a remote data node may want to request specific data, e.g. from the internet. This request may be transmitted to the central data center via the respective second visible-light based uplink data interface and the first visible-light based uplink data interface.

The data synchronization unit will then retrieve the requested data from the respective source, e.g. a server on the internet, and provide the data together with respective synchronization information e.g. to the encoder of the first RF downlink data interface. The synchronization information refers to information that is included in the data stream and allows the receiving remote data node to identify that the specific data is the data it had requested.

In an embodiment, the data synchronization unit may further be configured to provide multiplexed data for multiple remote data nodes with respective node identifiers via the first RF downlink data interface.

The data synchronization unit may not only include data for a single one of the remote data nodes in the downlink data stream. Instead the data synchronization unit may at the same time provide different remote data nodes with respective data.

When more than one remote data node requests data e.g. from the internet the remote data nodes, e.g. the visible light data communication sources, may include a node identifier in the request. The node identifier is also known to the decoder in the second RF downlink data interface or to the device that receives the data from the second RF downlink data interface at the respective remote data node to extract the respective data.

The data synchronization unit may then request the data from the respective sources and multiplex the data in the downlink data channel and include the node identifiers accordingly.

In another embodiment, the data synchronization unit may be configured to provide multiplexed data for multiple remote data nodes via at least two different TV channels.

The data synchronization unit may e.g. split the data for different remote data nodes over different TV channels, while a single TV channel may still be used to provide data to more than one remote data node. If e.g. four data nodes receive data this data may be transmitted via two TV channels, each TV channel carrying data for two remote data nodes. It is also possible that one TV channel carries data for three data nodes and the other TV channel carries data for one data node depending on the required bandwidth.

In a further embodiment, the data synchronization unit may be configured to provide in the RF signals transmitted to the second RF downlink data interfaces information about the TV channel that carries data for a specific remote data node.

This allows the remote data nodes, e.g. the second RF downlink data interfaces in the remote data nodes to automatically select the respective TV channels that carry the relevant data.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a communication system according to the present invention;
Fig. 2 shows a block diagram of another embodiment of a communication system according to the present invention;
Fig. 3 shows a block diagram of another embodiment of a communication system according to the present invention; and
Fig. 4 shows a block diagram of another embodiment of a communication system according to the present invention.

In the figures like reference signs denote like elements unless stated otherwise.

### DETAILED DESCRIPTION OF THE DRAWINGS

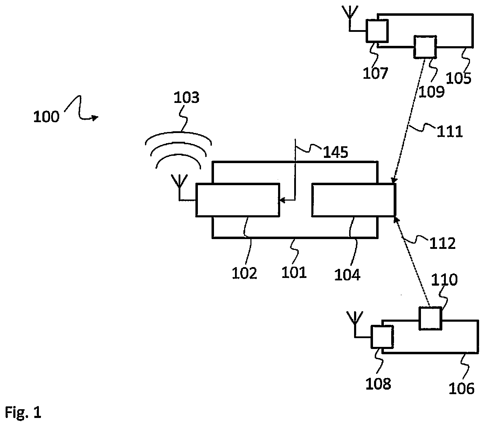

Fig. 1 shows a block diagram of communication system 100. The communication system 100 comprises a central data center 101 and two remote data nodes 105, 106. It is understood, that the two shown remote data nodes 105, 106 are just exemplarily shown and that any number of remote data nodes is possible.

The central data center 101 comprises a first RF downlink data interface 102 and a first visible-light based uplink data interface 104. The remote data nodes 105, 106 each comprise a second RF downlink data interface 107, 108 and a second visible-light based uplink data interface 109, 110.

The central data center 101 may e.g. be a TV broadcast station that emits RF signals 103, like e.g. UHF TV signals. Therefore, the first RF downlink data interface 102 may also be a TV signal RF data interface, over which the first RF downlink data interface 102 provides TV programs to the area surrounding the central data center 101.

Alternatively, the central data center 101 may e.g. be a cell phone base station that emits RF signals 103, like e.g. LTE data signals. The central data center 101 may e.g. be a cell phone base station.

The first RF downlink data interface 102 in any case uses an already present RF interface to provide additional data 145 in the downlink RF signal 103. In case of a TV channel RF signal 103 the first RF downlink data interface 102 may especially encode the data 145 in the downlink RF signal 103 in the image data, i.e. without additional data side channels or the like, as VLC. The data 145 may e.g. be provided to the central data center 101 via the internet or the central data center 101 may comprise respective data sources.

In the remote data nodes 105, 106 the second RF downlink data interfaces 107, 108 receive the RF signal 103 and extract the data 145. If the remote data nodes 105, 106 want to send data to the central data center 101 in return, they transmit such uplink data via the second visible-light based uplink data interfaces 109, 110 via visible light 111, 112 to the central data center 101. In the central data center 101 the visible light 111, 112 is received by the first visible-light based uplink data interface 104 and the respective data extracted from the visible light 111, 112.

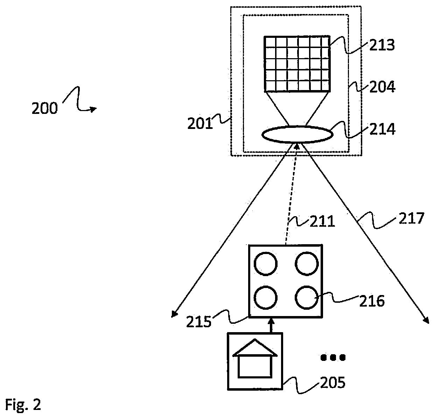

Fig. 2 shows a block diagram of another communication system 200. The communication system 200 shows details of the first visible-light based uplink data interface 204 and of the second visible-light based uplink data interfaces (not separately referenced).

The central data center 201 of the communication system 200 comprises a first visible-light based uplink data interface 204 with a camera sensor 213 and a lens 214 in front of the camera sensor 213. With the lens the light from a specific region is focused onto the camera sensor 213. This specific region may also be called a cell 217 that is served with the camera sensor 213.

Just exemplarily one remote data node 205 is shown in front of the lens 214, while more remote data nodes are hinted at by three dots. The distance between the lens 214 and the remote data node 205 in reality may be as large as tens of kilometers, like e.g. 50 km. This also makes it obvious that the first RF downlink data interface and the first visible-light based uplink data interface 104 may be provided separately since most RF communication standards will not cover a distance of 50 km.

The remote data node 205 may e.g. be a house or another building, like e.g. an industrial building. On top of the house or building a visible light data communication source 215 may be provided. The visible light data communication source 215 may e.g. comprise a matrix of LEDs 216, of which only four are shown. It is understood that the matrix may be adapted e.g. to the distance between the central data center 201 and the remote data node 205. The visible light data communication source 215 may e.g. be 10 cm * 10 cm or up to 2 m * 2 m or the like. Non-square sizes, like e.g. 1 m * 2 m, are also possible. Laser-based visible light data communication sources 215 are also possible.

It can be seen that the camera sensor 213 comprises a plurality of pixels (not separately referenced). The camera sensor 213 or any other component of the first visible-light based uplink data interface 204 may e.g. be calibrated to know which of the pixels represent which one of the remote data nodes 205. One pixel must not necessarily represent one remote data node 205. Instead a group of pixels may also represent a single remote data node 205. In addition or as an alternative the different remote data nodes 205 may transmit data with light at different wavelengths, e.g. with red, blue and green light, and/or different modulation frequencies to differentiate the single remote data nodes 205.

It is understood that the lens 214 is just exemplarily shown instead of any other optical arrangement, like e.g. telescopes or the like. Further, a plurality of optical arrangements may be provided with overlapping or separate cells 217. Multiple optical arrangements can e.g. focus onto remote data nodes 205 in the same direction but in different distances to the central data center 201. Further, every optical arrangement may also comprise a dedicated camera sensor 213.

It is clear that the first visible-light based uplink data interface 204 may comprise any further element that is necessary to demodulate or decode the visible light communication received via light 211 from the remote data node 205. Such elements may e.g. be signal processors, general purpose processors, FPGAs or the like and any other, e.g. discrete electronic or electric, element, that is necessary.

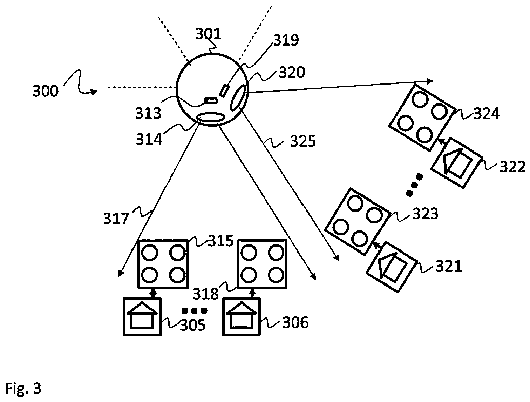

Fig. 3 shows a block diagram of another communication system 300. The communication system 300 comprises a central data center 301 that may e.g. be a TV broadcast station 301. In the central data center 301 a plurality of first visible-light based uplink data interfaces are provided (not explicitly referenced) to cover a 360° area around the central data center 301. Every first visible-light based uplink data interface covers a specific sector or cell of the 360° circle.

For sake of clarity only the elements of two of the cells 317, 325 are shown, wherein the other cells may comprise analogue arrangements.

Every cell may cover an area with a plurality of remote data nodes 305, 306, 321, 322. In the communication system 300 two remote data nodes 305, 306 are shown in cell 317 and two remote data nodes 321, 322 are shown in cell 325 and more remote data nodes are hinted at by three dots.

In the central data center 301 for every cell 317, 325 there is a dedicated arrangement of an optical element 314, 320 and a camera sensor 313, 319. This means that the light emitted by the visible light data communication sources 315, 318, 323, 324 will be received by the camera sensor 313, 319 that corresponds to the cell 317, 325 in which the respective visible light data communication sources 315, 318, 323, 324 is provided.

Not shown are the elements of the first RF downlink data interface of the central data center 301. It is understood, that especially in case that the central data center 301 is a TV broadcast station, the elements of the first RF downlink data interface are provided in the central data center 301 as TV RF interfaces and provide the downlink data channel to the remote data nodes 305, 306, 321, 322.

The further cells of the communication system 300 are indicated by dotted lines and it can be seen that with the arrangement of the communication system 300 a 360° area around the central data center 301 can be provided with data services via RF signals and visible light according to the present invention..

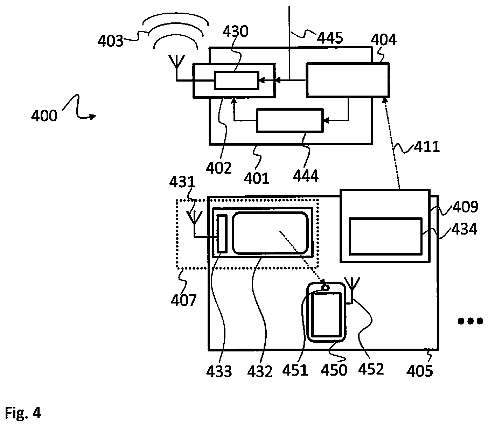

Fig. 4 shows a block diagram of another communication system 400. The communication system 400 comprises a central data center 401 and one exemplary remote data node 405.

In the central data center 401 the first RF downlink data interface 402 is a TV signal RF data interface and comprises an encoder 430. Further, the central data center 401 comprises a data synchronization unit 444. The encoder encodes the data 445 to be transmitted in the downlink in a TV RF signal 403 transmitted via the TV signal RF data interface 402.

The data synchronization unit 444 synchronizes the data received via the first visible-light based uplink data interface 404 with the data 445 transmitted via the first RF downlink data interface 402. This is e.g. necessary, when a remote data node 405 requests specific data via the second visible-light based uplink data interface 409 from the central data center 401. The data synchronization unit 444 may then retrieve the requested data and provide said data to the first RF downlink data interface 402 for transmission to the remote data node 405. It is understood, that the encoder 430 and the data synchronization unit 444 may also be integrally formed in a single unit.

The data synchronization unit 444 may e.g. provide the data 445 multiplexed for multiple remote data nodes 405 with respective node identifiers via the first RF downlink data interface 402. The data synchronization unit 444 may further provide the data 445 multiplexed for multiple remote data nodes 405 via at least two different TV channels.

In the remote data node 405 the second RF downlink data interface 407 is formed by an antenna 431 for receiving the RF signal 403 and a TV 432. The TV 432 serves as visible light communication downlink interface 432 that provides the data 445 transported in the RF signal 403 to a user device, here a smartphone 450, via visible light communication. Such visible light may be radiated by the screen of the TV 432. The decoder 433 in the second RF downlink data interface 407 may be the decoder of the TV 432 that also decodes the TV channels.

The remote data node 405 further comprises a second visible-light based uplink data interface 409. The second visible-light based uplink data interface 409 further comprises an uplink data receiver 434. The uplink data receiver 434 may e.g. be a Wi-Fi access point or any other type of data receiver, like e.g. a Bluetooth or visible light data receiver. The data received via uplink data receiver 434 is then provided to the first visible-light based uplink data interface 404 via visible light 411 by the second visible-light based uplink data interface 409.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a communication system 100, 200, 300, 400 for communicating data, the communication system 100, 200, 300, 400 comprising a central data center 101, 201, 301, 401, the central data center 101, 201, 301, 401 comprising a first RF downlink data interface 102, 402 for transmitting the data, and a first visible-light based uplink data interface 104, 204, 404, and a number of remote data nodes 105, 106, 205, 305, 306, 321, 322, 405, each data node comprising a second RF downlink data interface 107, 108, 407 configured to receive RF signals 103, 403 from the first RF downlink interface and a second visible-light based uplink data interface 109, 110, 409 configured to send visible light signals 111, 112, 211, 411 to the first visible-light based uplink data interface 104, 204, 404.

### List of reference signs

- 100, 200, 300, 400: communication system
- 101, 201, 301, 401: central data center
- 102, 402: first RF downlink data interface
- 103, 403: RF signals
- 104, 204, 404: first visible-light based uplink data interface
- 105, 106, 205, 305, 306, 321, 322, 405: remote data nodes
- 107, 108, 407: second RF downlink data interface
- 109, 110, 409: second visible-light based uplink data interface
- 111, 112, 211, 411: visible light signal

- 213, 313, 319: camera sensor
- 214,314, 320: optical arrangement
- 215, 315, 318, 323, 324: visible light data communication source
- 216: LED
- 217, 317, 325: Cell

- 430: encoder
- 431: antenna
- 432: visible light communication downlink interface
- 433: decoder
- 434: uplink data receiver
- 444: data synchronization unit

- 145, 445: data
- 450: Smartphone
- 451: camera
- 452: WIFI Interface

## Claims

1. Communication system (100, 200, 300, 400) for communicating data (145, 445), the communication system (100, 200, 300, 400) comprising:
a central data center (101, 201, 301, 401), the central data center (101, 201, 301, 401) comprising a first RF downlink data interface (102, 402) for transmitting the data (145, 445), and a first visible-light based uplink data interface (104, 204, 404), and
a number of remote data nodes (105, 106, 205, 305, 306, 321, 322, 405), each remote data node comprising a second RF downlink data interface (107, 108, 407) configured to receive RF signals (103, 403) from the first RF downlink interface and a second visible-light based uplink data interface (109, 110, 409) configured to send visible light signals (111, 112, 211, 411) to the first visible-light based uplink data interface (104, 204, 404),
wherein the central data center (101, 201, 301, 401) comprises a TV broadcast station,
wherein the first RF downlink data interface (102, 402) comprises a TV signal RF data interface, and
wherein the TV signal RF data interface comprises an encoder (430) configured to encode in a TV signal transmitted via the TV signal RF data interface the data (145, 445) to be transmitted in the downlink by modulating the brightness of at least one dedicated section of a TV image of the TV signal.

2. The communication system (100, 200, 300, 400) according to claim 1, wherein the second RF downlink data interface (107, 108, 407) comprises a decoder (433) that is configured to decode the data (145, 445) embedded in the TV signal, and a visible light communication downlink interface (432) configured to output the decoded data (145,445).

3. The communication system (100, 200, 300, 400) according to any one of the preceding claims, wherein the second visible-light based uplink data interface (109, 110, 409) comprises an uplink data receiver (434) configured to receive uplink data in the respective remote data node from a device.

4. The communication system (100, 200, 300, 400) according to claim 3, wherein the second visible-light based uplink data interface (109, 110, 409) comprises a visible light data communication source (215, 315, 318, 323, 324) configured to modulate the uplink data and emit a respective visible light signal (111, 112, 211, 411) including the modulated uplink data.

5. The communication system (100, 200, 300, 400) according to any one of the preceding claims, wherein the first visible-light based uplink data interface (104, 204, 404) comprises at least one camera sensor (213, 313, 319) to receive the visible light emitted by the second visible-light based uplink data interfaces (109, 110, 409).

6. The communication system (100, 200, 300, 400) according to claim 5, wherein the first visible-light based uplink data interface (104, 204, 404) comprises at least one optical arrangement (214, 314, 320) to focus the visible light emitted by the second visible-light based uplink data interfaces (109, 110, 409) onto the camera sensor (213, 313, 319).

7. The communication system (100, 200, 300, 400) according to claim 6, wherein the at least one optical arrangement (214, 314, 320) comprises at least one telescope.

8. The communication system (100, 200, 300, 400) according to any one of the preceding claims, wherein the central data center (101, 201, 301, 401) comprises a data synchronization unit (444) configured to synchronize the data received via the first visible-light based uplink data interface (104, 204, 404) with the data (145, 445) transmitted via the first RF downlink data interface (102, 402) by retrieving data requested with the data received via the first visible-light based uplink data interface (104, 204, 404) and providing said requested data via the first RF downlink data interface (102, 402) to the remote data nodes (105, 106, 205, 305, 306, 321, 322, 405).

9. The communication system (100, 200, 300, 400) according to claim 8, wherein the data synchronization unit (444) is further configured to provide the data (145, 445) multiplexed for multiple remote data nodes (105, 106, 205, 305, 306, 321, 322, 405) with respective node identifiers via the first RF downlink data interface (102, 402).

10. The communication system (100, 200, 300, 400) according to any one of claims 8 or 9, wherein the data synchronization unit (444) is configured to provide the data (145, 445) multiplexed for multiple remote data nodes (105, 106, 205, 305, 306, 321, 322, 405) via at least two different TV channels.

11. The communication system (100, 200, 300, 400) according to claim 10, wherein the data synchronization unit (444) is configured to provide in the RF signals (103, 403) transmitted to the second RF downlink data interfaces (107, 108, 407) information about the TV channel that carries data (145, 445) for a specific remote data node.

## Patentansprüche

1. Kommunikationssystem (100, 200, 300, 400) zum Übertragen von Daten (145, 445), wobei das Kommunikationssystem (100, 200, 300, 400) umfasst:
ein zentrales Rechenzentrum (101, 201, 301, 401), wobei das zentrale Rechenzentrum (101, 201, 301, 401) eine erste RF-Downlink-Datenschnittstelle (102, 402) zum Übertragen der Daten (145, 445) und eine erste auf sichtbarem Licht basierte Uplink-Datenschnittstelle (104, 204, 404) umfasst, und
eine Anzahl von entfernten Datenknoten (105, 106, 205, 305, 306, 321, 322, 322, 405), wobei jeder entfernte Datenknoten eine zweite RF-Downlink-Datenschnittstelle (107, 108, 407) umfasst, die konfiguriert ist, um HF-Signale (103, 403) von der ersten RF-Downlink-Schnittstelle zu empfangen, und eine zweite auf sichtbarem Licht basierende Uplink-Datenschnittstelle (109, 110, 409), die konfiguriert ist, um sichtbare Lichtsignale (111, 112, 211, 411) an die erste auf sichtbarem Licht basierende Uplink-Datenschnittstelle (104, 204, 404) zu senden,
wobei das zentrale Rechenzentrum (101, 201, 301, 401) eine Fernsehsendeanstalt umfasst,
wobei die erste RF-Downlink-Datenschnittstelle (102, 402) eine TV-Signal-RF-Datenschnittstelle umfasst, und
wobei die TV-Signal-RF-Datenschnittstelle einen Codierer (430) umfasst, der konfiguriert ist, um in einem TV-Signal, das über die TV-Signal-RF-Datenschnittstelle übertragen wird, die in der Abwärtsverbindung zu übertragenden Daten (145, 445) durch Modulieren der Helligkeit von mindestens einem bestimmten Abschnitt eines TV-Bildes des TV-Signals zu codieren.

2. Kommunikationssystem (100, 200, 300, 400) nach Anspruch 1, wobei die zweite RF-Downlink-Datenschnittstelle (107, 108, 407) einen Decoder (433) umfasst, der konfiguriert ist, um die in das TV-Signal eingebetteten Daten (145, 445) zu decodieren, und eine Sichtbares-Licht-Kommunikation-Downlink-Schnittstelle (432), die konfiguriert ist, um die decodierten Daten (145, 445) auszugeben.

3. Kommunikationssystem (100, 200, 300, 400) nach einem der vorhergehenden Ansprüche, wobei die zweite, auf sichtbarem Licht basierende Uplink-Datenschnittstelle (109, 110, 409) einen Uplink-Datenempfänger (434) umfasst, der konfiguriert ist, um Uplink-Daten in dem jeweiligen entfernten Datenknoten von einer Vorrichtung zu empfangen.

4. Kommunikationssystem (100, 200, 300, 400) nach Anspruch 3, wobei die zweite auf sichtbarem Licht basierende Uplink-Datenschnittstelle (109, 110, 409) eine Datenkommunikationsquelle (215, 315, 318, 323, 324) für sichtbares Licht umfasst, die konfiguriert ist, um die Uplink-Daten zu modulieren und ein entsprechendes Signal (111, 112, 211, 411) für sichtbares Licht auszusenden, das die modulierten Uplink-Daten beinhaltet.

5. Kommunikationssystem (100, 200, 300, 400) nach einem der vorhergehenden Ansprüche, wobei die erste auf sichtbarem Licht basierende Uplink-Datenschnittstelle (104, 204, 404) mindestens einen Kamerasensor (213, 313, 319) zum Empfangen des von den zweiten auf sichtbarem Licht basierenden Uplink-Datenschnittstellen (109, 110, 409) emittierten sichtbaren Lichts umfasst.

6. Kommunikationssystem (100, 200, 300, 400) nach Anspruch 5, wobei die erste auf sichtbarem Licht basierende Uplink-Datenschnittstelle (104, 204, 404) mindestens eine optische Anordnung (214, 314, 320) umfasst, um das von den zweiten auf sichtbarem Licht basierenden Uplink-Datenschnittstellen (109, 110, 409) emittierte sichtbare Licht auf den Kamerasensor (213, 313, 319) zu fokussieren.

7. Kommunikationssystem (100, 200, 300, 400) nach Anspruch 6, wobei die mindestens eine optische Anordnung (214, 314, 320) mindestens ein Teleskop umfasst.

8. Kommunikationssystem (100, 200, 300, 400) gemäß einem der vorhergehenden Ansprüche, wobei das zentrale Rechenzentrum (101, 201, 301, 401) eine Datensynchronisationseinheit (444) umfasst, die konfiguriert ist, um die über die erste auf sichtbarem Licht basierende Uplink-Datenschnittstelle (104, 204, 404) empfangenen Daten mit den Daten (145, 445) zu synchronisieren, die über die erste RF-Downlink-Datenschnittstelle (102, 402) übertragen werden, durch Abrufen von Daten, die mit den über die erste auf sichtbarem Licht basierende Uplink-Datenschnittstelle (104, 204, 404) empfangenen Daten angefordert werden, und Bereitstellen der angeforderten Daten über die erste RF-Downlink-Datenschnittstelle (102, 402) an die entfernten Datenknoten (105, 106, 205, 305, 306, 321, 322, 405).

9. Kommunikationssystem (100, 200, 300, 400) nach Anspruch 8, wobei die Datensynchronisationseinheit (444) ferner konfiguriert ist, um die für mehrere entfernte Datenknoten (105, 106, 205, 305, 306, 321, 322, 405) gemultiplexten Daten (145, 445) mit entsprechenden Knotenidentifikatoren über die erste RF-Downlink-Datenschnittstelle (102, 402) bereitzustellen.

10. Kommunikationssystem (100, 200, 300, 400) nach einem der Ansprüche 8 oder 9, wobei die Datensynchronisationseinheit (444) konfiguriert ist, um die für mehrere entfernte Datenknoten (105, 106, 205, 305, 306, 321, 322, 405) gemultiplexten Daten (145, 445) über mindestens zwei verschiedene TV-Kanäle bereitzustellen.

11. Kommunikationssystem (100, 200, 300, 400) nach Anspruch 10, wobei die Datensynchronisationseinheit (444) konfiguriert ist, um in den HF-Signalen (103, 403), die an die zweiten HF-Downlink-Datenschnittstellen (107, 108, 407) übertragen werden, Informationen über den Fernsehkanal bereitzustellen, der Daten (145, 445) für einen bestimmten entfernten Datenknoten trägt.

## Revendications

1. Système de communication (100, 200, 300, 400) pour communiquer des données (145, 445), le système de communication (100, 200, 300, 400) comprenant:
un centre de données central (101, 201, 301, 401), le centre de données central (101, 201, 301, 401) comprenant une première interface de données de liaison descendante RF (102, 402) pour transmettre les données (145, 445), et une première interface de données de liaison montante à lumière visible (104, 204, 404), et
un certain nombre de noeuds de données distants (105, 106, 205, 305, 306, 321, 322, 405), chaque noeud de données distant comprenant une seconde interface de données de liaison descendante RF (107, 108, 407) configurée pour recevoir des signaux RF (103, 403) de la première interface de liaison descendante RF et une seconde interface de données de liaison montante à lumière visible (109, 110, 409) configurée pour envoyer des signaux de lumière visible (111, 112, 211, 411) vers la première interface de données de liaison descendante (104, 204, 404),
dans lequel le centre de données central (101, 201, 301, 401) comprend une station de diffusion TV,
dans laquelle la première interface de données de liaison descendante RF (102, 402) comprend une interface de données RF de signal TV, et
dans laquelle l'interface de données RF du signal de télévision comprend un codeur (430) configuré pour coder dans un signal de télévision transmis via l'interface de données RF du signal de télévision les données (145, 445) à transmettre sur la liaison descendante en modulant la luminosité d'au moins une section dédiée d'une image TV du signal de télévision.

2. Système de communication (100, 200, 300, 400) selon la revendication 1, dans lequel la seconde interface de données de liaison descendante RF (107, 108, 407) comprend un décodeur (433) qui est configuré pour décoder les données (145, 445) intégrées dans le signal TV, et une interface de liaison descendante de communication en lumière visible (432) configurée pour délivrer les données décodées (145, 445).

3. Système de communication (100, 200, 300, 400) selon l'une quelconque des revendications précédentes, dans lequel la seconde interface de données de liaison montante basée sur la lumière visible (109, 110, 409) comprend un récepteur de données de liaison montante (434) configuré pour recevoir des données de liaison montante dans le noeud de données distant respectif provenant d'un dispositif.

4. Système de communication (100, 200, 300, 400) selon la revendication 3, dans lequel la seconde interface de données de liaison montante basée sur la lumière visible (109, 110, 409) comprend une source de communication de données à lumière visible (215, 315, 318, 323, 324) configurée pour moduler les données de liaison montante et émettre un signal lumineux visible respectif (111, 112, 211, 411) incluant les données modulées de liaison montante.

5. Système de communication (100, 200, 300, 400) selon l'une quelconque des revendications précédentes, dans lequel la première interface de données de liaison montante basée sur la lumière visible (104, 204, 404) comprend au moins un capteur de caméra (213, 313, 319) pour recevoir la lumière visible émise par les deuxièmes interfaces de données de liaison montante basées sur la lumière visible (109, 110, 409).

6. Système de communication (100, 200, 300, 400) selon la revendication 5, dans lequel la première interface de données de liaison montante à base de lumière visible (104, 204, 404) comprend au moins un dispositif optique (214, 314, 320) pour focaliser la lumière visible émise par les secondes interfaces de données de liaison montante à base de lumière visible (109, 110, 409) sur le capteur (213, 313, 319) de caméra.

7. Système de communication (100, 200, 300, 400) selon la revendication 6, dans lequel le au moins un dispositif optique (214, 314, 320) comprend au moins un télescope.

8. Système de communication (100, 200, 300, 400) selon l'une quelconque des revendications précédentes, dans lequel le centre de données central (101, 201, 301, 401) comprend une unité de synchronisation de données (444) configurée pour synchroniser les données reçues via la première interface de données de liaison montante (104, 204, 404) à lumière visible avec les données (145, 445) transmis via la première interface de données de liaison descendante RF (102, 402) en récupérant les données demandées avec les données reçues via la première interface de données de liaison montante (104, 204, 404) basée sur la lumière visible et en fournissant lesdites données demandées via la première interface de données de liaison descendante RF (102, 402) aux nœuds de données distants (105, 106, 205, 305, 306, 321, 322, 405).

9. Système de communication (100, 200, 300, 400) selon la revendication 8, dans lequel l'unité de synchronisation de données (444) est en outre configurée pour fournir les données (145, 445) multiplexées pour plusieurs noeuds de données distants (105, 106, 205, 305, 306, 321, 322, 405) avec leurs identificateurs de noeud respectifs via la première interface de données descendante RF (102, 402).

10. Système de communication (100, 200, 300, 400) selon l'une quelconque des revendications 8 ou 9, dans lequel l'unité de synchronisation de données (444) est configurée pour fournir les données (145, 445) multiplexées pour plusieurs noeuds de données distants (105, 106, 205, 305, 306, 321, 322, 405) via au moins deux canaux TV différents.

11. Système de communication (100, 200, 300, 400) selon la revendication 10, dans lequel l'unité de synchronisation de données (444) est configurée pour fournir dans les signaux RF (103, 403) transmis aux deuxièmes interfaces de données de liaison descendante RF (107, 108, 407) des informations sur le canal TV qui porte les données (145, 445) pour un noeud de données distant spécifique.
